# EUROPÄISCHE PATENTSCHRIFT

(11) **EP 2 148 759 B1**
(45) Veröffentlichungstag und Bekanntmachung des Hinweises auf die Patenterteilung: **08.12.2010**
(21) Anmeldenummer: 08749321.9
(22) Anmeldetag: 05.05.2008
(51) Int. Cl.: B23Q 1/70, B23Q 15/22, F16C 39/06, H02K 41/00

(54) **DYNAMISCH OPTIMIERTE WERKZEUGMASCHINE MIT ÜBERLAGERTEN ANTRIEBSSYSTEMEN**
DYNAMICALLY OPTIMIZED MACHINE TOOL WITH SUPERIMPOSED DRIVE SYSTEMS
MACHINE-OUTIL OPTIMISÉE DYNAMIQUEMENT À SYSTÈMES D'ENTRAÎNEMENT SUPERPOSÉS

(30) Priorität: 07.05.2007 DE 102007021294
(43) Veröffentlichungstag der Anmeldung: 03.02.2010
(73) Patentinhaber: P & L GmbH & Co. KG, 20148 Hamburg (DE)
(72) Erfinder: RÖDERS, Jürgen, 29614 Soltau (DE)
(74) Vertreter: Weber, Joachim
(86) Internationale Anmeldenummer: PCT/EP2008/003593
(87) Internationale Veröffentlichungsnummer: WO 2008/135265

(56) Entgegenhaltungen:
- EP-A- 0 315 469
- JP-A- 1 240 266
- US-A- 5 573 443

## Beschreibung

Die Erfindung betrifft eine moderne gesteuerte Werkzeugmaschine. Modern gesteuerte Werkzeugmaschinen sind heute meist mehrachsig aufgebaut. Durch entsprechende Verfahrbewegungen der einzelnen Maschinenachsen wird das Bearbeitungswerkzeug relativ zum Werkstück bewegt, um auf diese Weise die erforderliche Bearbeitung am Werkstück durchzuführen.

Bei komplexen Konturen werden von den einzelnen Maschinenachsen sehr dynamische Bewegungen gefordert. Um kurze Bearbeitungszeiten zu erreichen, sollen die Verfahrbewegungen möglichst schnell und dynamisch ausgeführt werden. Gleichzeitig wird eine hohe Genauigkeit und/oder Oberflächenqualität am Werkstück gefordert.

Außerdem gibt es eine maximal mögliche prozessbedingte Bahngeschwindigkeit für die Relativbewegung zwischen Werkzeug und Werkstück, z.B. bei der Fräsbearbeitung der maximal zulässige Vorschub pro Zahn.

Bei der Herstellung von hochgenauen Werkstücken und/oder hohen Oberflächenqualitäten wird die maximal mögliche Bahngeschwindigkeit in den meisten Fällen weniger durch den Bearbeitungsprozess begrenzt, sondern durch die Dynamik der Werkzeugmaschine. Je höher die Dynamik der Werkzeugmaschine ist, desto höher ist die Bahngeschwindigkeit, bei der noch ausreichend gute Qualitäten bezüglich Genauigkeit und Oberflächenqualität hergestellt werden.

Um möglichst kurze Bearbeitungszeiten zu erzielen, ist es bekannt, dass die Steuerung mit Hilfe eines Lookahead-Fensters eine Bahnplanung macht und die relative Bahngeschwindigkeit in Abhängigkeit der Geometrie der Bahn automatisch anpasst, z.B. indem an Stellen in der Bahn mit starker Krümmung die Geschwindigkeit reduziert wird und an Stellen mit wenig oder keiner Krümmung die maximal zulässige Bahngeschwindigkeit zur Anwendung kommt. Eine moderne Steuerung gestaltet die Bahnplanung dabei so, dass die Werkzeugmaschine an jeder Stelle im Bearbeitungsprogramm mit höchstmöglicher Bahngeschwindigkeit verfährt, wobei die Anforderungen an Genauigkeiten und Oberflächenqualitäten eingehalten werden.

Je besser und steifer die Konstruktion der Werkzeugmaschine ist, desto schneller ist die zulässige Bahngeschwindigkeit an jeder Stelle im Bearbeitungsprogramm, bei der die Qualitätsanforderungen noch eingehalten werden. Daher ist eine möglichst steife und auf hohe Maschinendynamik ausgelegte Konstruktion das Ziel der Maschinenkonstruktionen.

Eine wesentliche Begrenzung der Dynamik moderner Werkzeugmaschinen liegt darin, dass die einzelnen zu verfahrenden Maschinenachsen eine gewisse Baugröße erfordern, um ausreichend Steifigkeit und den geforderten Verfahrweg zu erreichen. Dadurch bedingt haben die einzelnen Maschinenachsen aber auch eine relativ hohe Masse, die die Dynamik der Achsen stark begrenzt, insbesondere wenn es sich um Achsen handelt, die aufeinander gesetzt werden, wie z.B. die Y- und Z-Achse bei einer Portalfräsmaschine. Dort trägt und verfährt die Y-Achse die gesamte Z-Achse. Mit verschiedenen Ansätzen zum Leichtbau versucht man die Dynamik zu erhöhen, aber die Möglichkeiten dafür sind begrenzt.

Gerade bei der Herstellung komplexer Konturen kann die stark eingeschränkte Maschinendynamik dazu führen, dass ein Großteil der Bearbeitung mit Bahngeschwindigkeiten weit unterhalb der maximal möglichen prozessbedingten Grenze gefahren werden, um die geforderten Qualitäten zu erreichen, auch dann, wenn moderne Steuerungskonzepte zur Steuerung der Maschine mit Splineinterpolation und optimaler Bahnplanung eingesetzt werden.

Krümmungsschwankungen in der Bahn erfordern Beschleunigungsänderungen, die über die Ableitung der Beschleunigung nach der Zeit, den Ruck, umgesetzt werden. Je stärker die Krümmungsschwankungen sind, desto stärker sind die erforderlichen Beschleunigungsänderungen und desto höher ist der erforderliche Ruck, um so eine Bahn abzufahren. Ab einem bestimmten Ruck führt dieser jedoch zu Anregungen in der Maschine und damit zu Schwingungen und Ungenauigkeiten. Jede Maschine hat für ihre Achsen einen maximal möglichen Ruck, der noch fahrbar ist, ohne dass es zu den unerwünschten Anregungen kommt. Um sicherzustellen, dass ein bestimmter Ruck bei der Bearbeitung nicht überschritten wird, planen moderne Maschinensteuerungen die Bahngeschwindigkeit daher so, dass auch der Ruck in den Maschinenachsen immer etwas unterhalb der maximal zulässigen Grenze für die Maschine bleibt. Dann erreicht man eine optimale Zeit bei ausreichender Qualität am Werkstück. Außerdem muss die Geschwindigkeitsplanung in der Bahn natürlich auch die maximale Beschleunigung berücksichtigen und bei kleinen Radien in der Bahn die Geschwindigkeit entsprechend absenken.

Eine gewisse Verkürzung der Bearbeitungszeiten lässt sich noch durch eine steuerungsseitige Glättung erreichen. Die Werkzeugbahn relativ zum Werkstück wird entsprechend den vom Bediener vorgegebenen Toleranzen automatisch geglättet, um ein "weicheres" und damit schnelleres Verfahren der Maschine zu ermöglichen. Eine gute Glättung durch die Steuerung senkt die Ruckanforderung an die Achsen in der Maschine, indem Krümmungsänderungen und kleine Radien, bzw. scharfe Ecken, in der Bahn soweit es geht verringert werden. So eine Glättung geht jedoch auf Kosten der Genauigkeit am Werkstück und ist daher in vielen Fällen nicht oder nur sehr begrenzt möglich.

Bei hohen Genauigkeitsanforderungen muss die Werkstückkontur in allen Einzelheiten exakt hergestellt werden und entsprechend exakt die Werkzeugbahn relativ zum Werkstück abgefahren werden.

Die US 5573443 A offenbart ein Verfahren zur Steuerung der Bewegung einer Baugruppe einer Werkzeugmaschine gemäß dem Oberbegriff des Anspruchs 1.

Der Erfindung liegt die Aufgabe zugrunde, ein Verfahren zur Steuerung einer Werkzeugmaschine zu schaffen, welches bei einfacher Ausgestaltung und betriebssicherer Anwendbarkeit eine Optimierung der Bewegungsabläufe und der möglichen Bearbeitungsgeschwindigkeiten sichert.

Erfindungsgemäß wird die Aufgabe durch die Merkmalskombinationen des Anspruchs 1 gelöst, die Unteransprüche zeigen weitere vorteilhafte Ausgestaltungen der Erfindung. Erfindungsgemäß erfolgt somit eine Aufteilung in unterschiedliche Bewegungsbahnen, nämlich eine geglättete Bahn, längs derer die Baugruppe der Werkzeugmaschine, beispielsweise einer Fräsmaschine, bewegt wird, sowie eine Differenzbahn, welche Bewegungen der Spindelwelle und damit Bewegungen des mit der Spindelwelle verbundenen Werkzeugs ermöglicht.

Erfindungsgemäß wird die Werkzeugmaschine, beispielsweise eine Fräsmaschine, mit einer magnetgelagerten Bearbeitungsspindel ausgestattet. Eine magnetgelagerte Spindel zeichnet sich dadurch aus, dass die rotierende Spindelwelle über starke geregelte Elektromagnete in einer definierten Position schwebend, d.h., ohne mechanische Berührung, im Spindelgehäuse gehalten wird. Zwischen den Magneten der Lager der Spindel und der Spindelwelle befindet sich an allen Lagerstellen ein Spalt. Innerhalb der Spaltmaße kann die Spindelwelle in dem Spindelgehäuse durch die Magnetlagerregelung frei hin und her bewegt werden, wobei die Spalte üblicherweise sehr eng gehalten werden, um hohe Magnetkräfte aufbauen zu können. Ein gewisses Spaltmaß ist jedoch erforderlich, da die Spindelwelle bei Störkräften von außen aus ihrer Position herausgestoßen werden kann, ehe die Regelung die Störung ausregeln kann. In solchen Fällen ist es wichtig, dass es zu keiner mechanischen Berührung zwischen Magneten und Spindelwelle kommt, um Beschädigungen zu vermeiden. Die Spalte in den Lagerstellen müssen so groß bemessen sein, dass es bei allen vorkommenden Störkräften ausreichend Platz für die maximal resultierende Auslenkung gibt, die auftritt, bis die Regelung die Störung ausregelt.

Die Magnetlagerung der Spindel erlaubt es, die Spindelwelle innerhalb der Spaltmaße der Magnetlager zu positionieren, zu bewegen oder auch zu verfahren. Der Bewegungsraum der Spindelwelle ist durch die Spaltmaße der Magnetlager definiert und damit auf sehr kleinen Raum beschränkt. Innerhalb dieses Bewegungsraumes kann die Spindelwelle aber aufgrund ihrer kleinen Maße mit sehr hoher Dynamik beliebig verfahren werden. Die Magnetlagerung der Spindelwelle ist extrem dynamisch, um eventuell auftretende Bearbeitungskräfte auszuregeln. Diese hohe Dynamik wird erfindungsgemäß genutzt, um die Spindelwelle innerhalb ihres Bewegungsraumes sehr dynamisch zu bewegen.

Die erfindungsgemäße, mit einer Magnetspindel ausgestattete Werkzeugmaschine verfügt somit über zwei Bewegungs- und Verfahrmöglichkeiten, die überlagert werden können, den Maschinenachsen mit relativ großen Verfahrwegen aber geringerer Dynamik, und der Spindelwelle mit sehr hoher Dynamik aber sehr eingeschränkten Bewegungsmöglichkeiten in jeder Richtung.

Der Erfindung macht sich die Besonderheiten beider Bewegungs-und Verfahrmöglichkeiten einer Werkzeugmaschine mit Magnetspindel zunutze. Die exakte Werkzeugbahn, die die Relativbewegung zwischen Bearbeitungswerkzeug und Werkstück beschreibt, kommt üblicherweise aus einem Programmiersystem oder wird direkt an der Steuerung programmiert.

Die exakte programmierte oder anders vorgegebene Werkzeugbahn wird in der Maschinensteuerung in zwei Bahnen aufgeteilt und parallel verarbeitet und interpoliert:
- In eine geglättete Bahn, wobei mit einer fest vorgegebenen Maximaltoleranz geglättet wird und das Ziel der Glättung darin liegt, die Krummungsschwankungen in der Bahn, so weit es innerhalb der vorgegebenen Toleranz möglich ist, zu verringern und scharfe Ecken und kleine Radien ebenfalls zu eliminieren oder zu verringern.
- In eine Differenzbahn, die, wenn sie auf die geglättete Bahn aufaddiert wird, wieder die ursprüngliche exakte Bahn ergibt und die sehr kleine Verfahrwege macht.

Da die Glättung der ursprünglichen Bahn mit einer fest vorgegebenen Maximaltoleranz erfolgt, ist der Verfahrweg der Differenzbahn auf einen sehr kleinen Bewegungsraum beschränkt, dessen Abmessungen in jeder Richtung innerhalb der für die Glättung vorgegebenen Maximaltoleranz liegen.

Beide Bahnen, die geglättete Bahn und die Differenzbahn, werden parallel in der Steuerung interpoliert. Die Sollwerte für die geglättete Bahn werden an die Antriebe für die Maschinenachsen gegeben, die Sollwerte für die Differenzbahn an die Antriebe für die Magnetlager. Die Verfahrbewegungen der Maschinenachsen und die relativ kleinen aber dynamischen Verfahrbewegungen der Spindelwelle in der magnetgelagerten Frässpindel überlagern sich synchron und ergeben so die exakte Werkzeugbahn als Relativbewegung zwischen Werkzeug und Werkstück. Es ist also wichtig, dass die Glättungstoleranz in jeder Richtung kleiner ist, als der mögliche Bewegungsraum der Spindelwelle im Spindelgehäuse, damit es nicht zum Kontakt zwischen der Spindelwelle und dem Magnetlagern kommt.

Der Vorteil dieser Vorgehensweise liegt darin, dass die Gesamtbearbeitungszeit für beide Bahnen erheblich reduziert werden kann. Die geglättete Bahn kann von den Maschinenachsen mit einer erheblich höheren Bahngeschwindigkeit durchfahren werden, als die exakte Bahn, da die Verringerung der Krümmungsschwankungen, kleinen Radien und scharfen Ecken in der geglätteten Bahn zu einer erheblich geringeren Ruck- und Beschleunigungsanforderung in den Achsen führt.

Bewegungen mit hoher Ruckanforderung und Dynamik muss dagegen die Spindelwelle ausführen. Auf Grund der oben beschriebenen Lagertechnik ist die Spindelwelle dazu aber auch in der Lage. Die hohen Ruckanforderungen führen auch nicht zu unerwünschten Anregungen der Maschinenstruktur, da die Masse der Spindelwelle relativ gering ist. Da die Verfahrbewegungen der Differenzbahn sich auf einen sehr kleinen Bewegungsraum beschränken, kann die Spindelwelle diese auch vollständig ausführen.

Die Erfindung ermöglicht eine starke Verkürzung der Bearbeitungszeiten auf Werkzeugmaschinen durch eine intelligente Regelung der einzelnen Komponenten. Aufgrund der hohen Regelgüte und Dynamik der magnetgelagerten Spindel lässt sich dieses Verfahren auch bei höchsten Genauigkeitsanforderungen und Oberflächenqualitäten realisieren.

Eine sinnvolle Erweiterung des Vorgehens besteht darin, für die verschiedenen Achsrichtungen separate Toleranzen vorzugeben, abhängig von dem maximal möglichen Bewegungsraum der Spindelwelle in jeder Achsrichtung, wenn dieser in den einzelnen Achsrichtungen unterschiedlich ist.

Bei den Maschinenachsen, die die Spindelwelle verfahren, z.B. bei Portalmaschinen die Y- und Z-Achse, kann die Überlagerung der Bewegungen der jeweiligen Maschinenachse und der Spindelwelle zur Impulsentkopplung genutzt werden. Die Impulsentkopplung ist dann von Vorteil, wenn extrem dynamische Bewegungen der Spindelwelle trotz der geringen Masse der Spindelwelle zu Anregungen der Maschinenstruktur und damit Ungenauigkeiten oder schlechteren Oberflächen führen. Dann kann die exakte Bahn für die Relativbewegung zwischen Bearbeitungswerkzeug und Werkstück so aufgeteilt werden, dass eine relativ schwere Maschinenachse nicht nur eine geglättete Bahn abfährt, sondern dass an den entsprechenden Stellen in der Bahn von der Maschinenachse zusätzlich überlagert eine sehr kleine aber ruckartige Gegenbewegung ausgeführt wird, an denen die Spindelwelle aufgrund einer schnellen Bewegung einen Ruckimpuls in die Achse einleitet. Der durch eine schnelle Bewegung der Spindelwelle in die Achse eingeleitete Ruckimpuls wird so durch einen gleich großen Gegenimpuls aufhoben und sorgt so dafür, dass eine Anregung des Maschinengestells vermieden wird. Die Gegenbewegung ist aufgrund des großen Masseunterschieds erheblich kleiner als die Bewegung der Spindelwelle, so dass es noch zu einem signifikanten Hub am Werkzeug kommt. Das kann aber nur in den Achsen realisiert werden, bei denen sich Spindelwelle und Achse direkt beeinflussen, z.B. der Z-Achse der Portalmaschine. Bei einer Tischachse in einer Portalmaschine ist das kaum möglich, da zwischen Tischachse und Spindel das gesamte Maschinengestell liegt, dessen Anregung verhindert werden soll.

Bei bestimmten Geometrien ist eine zusätzliche Erweiterung des beschriebenen Vorgehens vorteilhaft, um eine bestmögliche Ausnutzung der Regelung der Achsen und der magnetgelagerten Spindel zu erreichen. Eine solche Geometrie sind scharfe Ecken in der Bahn, also Richtungswechsel, bei denen es keinen tangentialen Übergang gibt. Bei konventionellen Maschinen verfährt die Maschine mit einer Bremsrampe in die Ecke, hält ganz kurz an und beschleunigt aus der Ecke heraus der Bahn in die neue Richtung folgend. Wenn es nicht auf hohe Genauigkeiten ankommt, hält die Maschine nicht ganz an und verschleift die Ecke. Das ist aber in der Regel unerwünscht.

Auch mit dem oben beschriebenen Vorgehen, bei dem die Bahn in eine geglättete Bahn und eine Differenzbahn aufgeteilt wird, die beide synchron durchfahren werden, um am Werkstück die exakte Bahn zu realisieren, muss die Maschine anhalten. Die Dynamik der Spindelwelle ist zwar sehr hoch. Wenn jedoch eine exakte Ecke mit Richtungssprung in der Bahn abgefahren werden soll, dann muss auch die magnetgelagerte Spindelwelle mit einer Bremsrampe anhalten, um in der neuen Richtung wieder beschleunigen zu können. Wenn jedoch die Spindelwelle die Bahngeschwindigkeit auf Null reduziert, dann müssen bei synchroner Interpolation der Maschinenachsen auch die Maschinenachsen die Bahngeschwindigkeit auf Null reduzieren, um Ungenauigkeiten zu vermeiden, obwohl die geglättete Bahn der Maschinenachsen das nicht erfordern würde. Die Brems- und Beschleunigungsrampen müssen sich dann an den relativ trägen Maschinenachsen orientieren und das Verfahren würde bei solchen Geometrieelementen keine Vorteile bringen. Das kann aber vermieden werden, wenn man die Differenzbahn der Spindelwelle so plant, dass diese nicht exakt synchron durchfahren wird, sondern dass die Spindelwelle ihren Bewegungsraum zusätzlich nutzt, um etwas vorauszueilen oder hinterherzulaufen, wobei die Summe beider Bahnen (der geglätteten und der Differenzbahn) nach wie vor stets die exakte Bahn ergibt. Das kann bei einer Ecke dann dazu führen, dass die Spindelwelle vor der Ecke etwas voreilt, in der Ecke kurzfristig mit exakt zu den Maschinenachsen entgegengesetzter Geschwindigkeit verfährt, so dass es kurzzeitig zu einem relativen Stillstand zwischen Werkzeug und Werkstück kommt, und dann nach der Ecke etwas hinterher eilt.

Im Folgenden wird die Erfindung anhand von Ausführungsbeispielen in Verbindung mit der Zeichnung beschrieben. Dabei zeigt:
- Fig. 1: eine schematische, perspektivische Ansicht einer er- findungsgemäß zu verwendenden Werkzeugmaschine,
- Fig. 2: eine schematische Teil-Schnittansicht einer Spindellagerung,
- Fig. 3: eine schematische Ansicht einer exakten Bahn und ei- ner geglätteten Bahn gemäß einem ersten Ausführungs- beispiel der Erfindung,
- Fig. 4: eine zu Fig. 3 zugehörige schematische Darstellung einer erfindungsgemäßen Differenzbahn,
- Fig. 5: eine Darstellung, analog Fig. 3, eines weiteren Aus- führungsbeispiels einer erfindungsgemäßen exakten Bahn und einer zugehörigen geglätteten Bahn, und
- Fig. 6: eine Darstellung, analog Fig. 4, einer erfindungsgemäßen Differenzbahn, passend zu der Dar- stellung der Fig. 5.

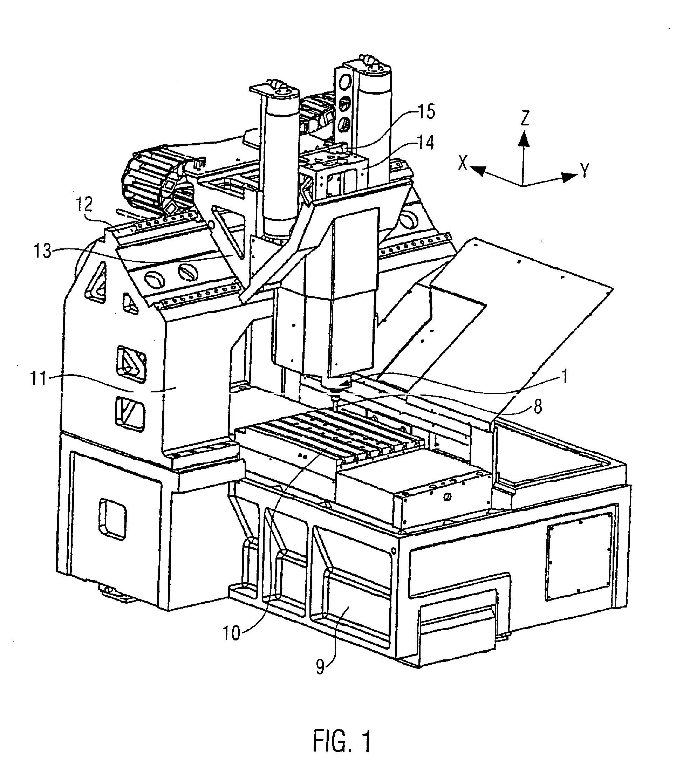

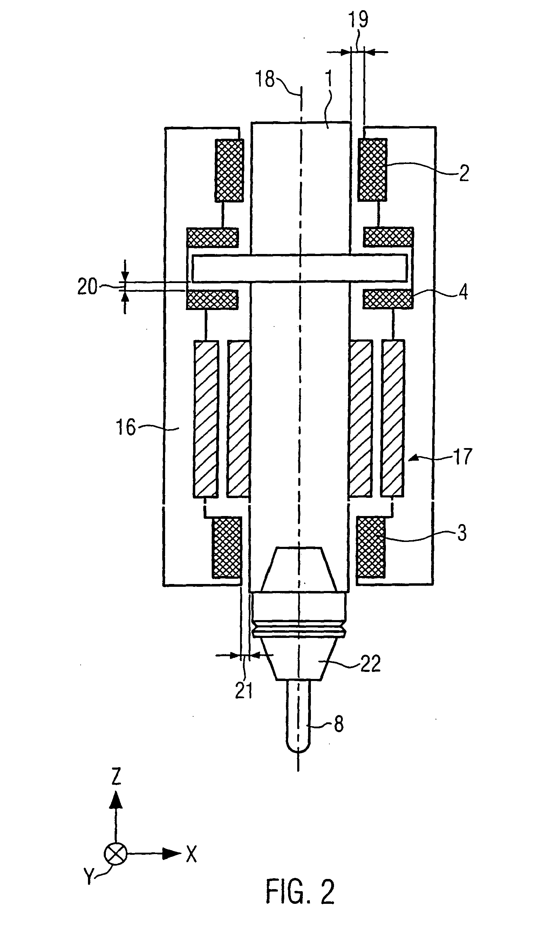

Die Fig. 1 zeigt in schematischer Darstellung in perspektivischer Ansicht ein Maschinengestell einer Portalfräsmaschine als Beispiel für eine erfindungsgemäß zu verwendende Werkzeugmaschine. Die Portalfräsmaschine umfasst eine Spindel 1, deren Lagerung nachfolgend in Verbindung mit Fig. 2 im Einzelnen beschrieben wird. Die Spindel 1 ist mit einem Werkzeug 8, beispielsweise einem Fräser, verbunden. Insofern entspricht der Aufbau insbesondere der Werkzeugaufnahme sowie der einzelnen Komponenten der Portalfräsmaschine dem Stand der Technik. Auf die Darstellung eines Werkstücks wurde in Fig. 1 verzichtet.

Die Fig. 1 zeigt insbesondere ein Maschinengestell 9, auf welchem längs einer X-Achse ein Maschinentisch 10 verfahrbar ist. An dem Gestell 9 ist weiterhin ein Portal 11 befestigt, welches mit Führungen 12 versehen ist, mittels derer eine Bewegung eines Schlittens 13 in Y-Richtung möglich ist. An dem Schlitten 13 sind Führungen 15 ausgebildet, längs welchen ein Schlitten 14 in Z-Richtung verfahrbar ist. Der Schlitten 14 trägt die Spindel 1.

Die Bewegungsrichtungen X-Y-Z bilden die X-Achse, die Y-Achse sowie die Z-Achse, welche der Steuerung der Werkzeugmaschine zugrunde liegen. Die erfindungsgemäß als Baugruppen bezeichneten Teile umfassen somit u.a. den Schlitten 13 für die Bewegung längs der Y-Achse, den Schlitten 14 für eine Bewegung längs der Z-Achse sowie den Tisch 10 für eine Bewegung längs der X-Achse.

Die Fig. 2 zeigt in schematischer Weise die Lagerung der Spindel 1, welche ein Gehäuse 16 umfasst, welches in dem Schlitten 14 integriert ist. Die Spindel 1 ist um ihre Mittelachse 18 gelagert. Die Lagerung erfolgt mittels Magnetlagern, nämlich mittels eines oberen radialen Magnetlagers 2, eines unteren radialen Magnetlagers 3 sowie eines axialen Magnetlagers 4.

Die Magnetlager 2, 3 und 4 weisen, wie aus dem Stand der Technik bekannt, jeweils Lagerspalte auf, welche zur Funktion der Magnetlager erforderlich sind. In schematischer Weise ist ein Lagerspalt 19 für das obere radiale Magnetlager 2 sowie ein Spalt 20 für das axiale Magnetlager 4 eingezeichnet. Ein Spalt für das untere radiale Magnetlager 3 trägt das Bezugszeichen 21.

Das Werkzeug 8 ist mittels einer Werkzeugaufnahme 22 in üblicher Weise an der Spindel 1 lösbar gelagert.

Die Drehung der Spindel 1 (Spindelwelle) erfolgt mittels eines Spindelmotors 17.

Der in Fig. 2 gezeigte Aufbau der Spindellagerung 1 entspricht dem Stand der Technik.

Die Fig. 2 zeigt weiterhin die Bewegungsachsen X, Y und Z in der in Fig. 2 gezeigten stirnseitigen Ansicht gemäß der Anordnung der Fig. 1.

Erfindungsgemäß ist wichtig, dass die Spindel durch ihre Magnetlager 2, 3, 4 innerhalb des durch die jeweiligen Lagerspalte 19, 20, 21 (sowie weitere, nicht dargestellte Lagerspalte) frei hin und her bewegbar ist.

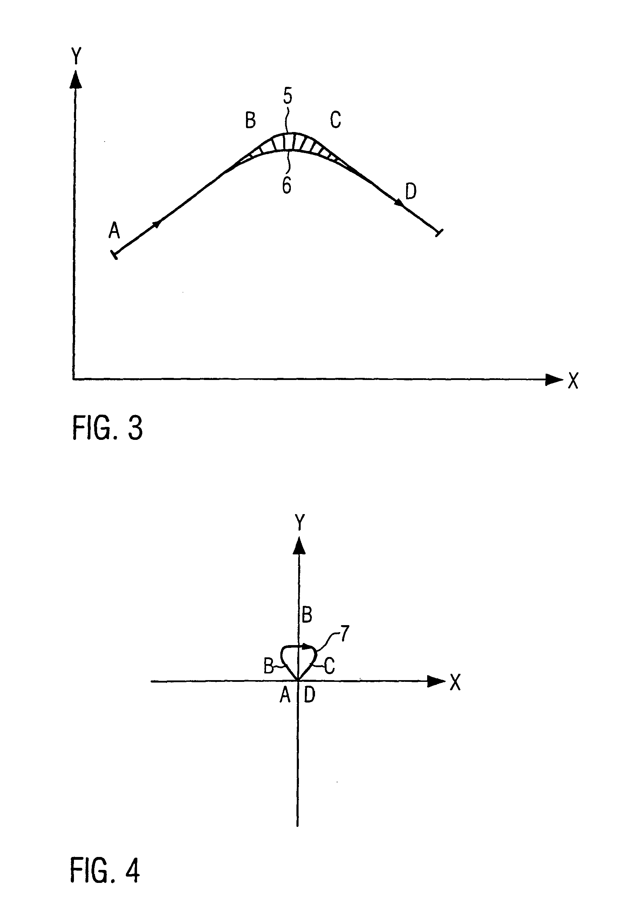

Die Fig. 3 zeigt eine exakte Bewegungsbahn 5 in graphischer Darstellung in der X-Y-Ebene über die Punkte A, B, C, D. Die exakte Bahn 5, auf welcher sich ein Bezugspunkt des Werkzeugs 8 relativ zu einem Werkstück bewegen soll, durchläuft gemäß Fig. 3 zunächst eine gerade Strecke von A nach B. Zwischen den Punkten B und C folgt ein Kreisabschnitt, der dann in Punkt C wieder in eine gerade Bahn übergeht. Zwischen Punkt C und D ist die Bahn wieder gerade.

Eine erfindungsgemäß mit vorgegebenen Toleranzen geglättete Bahn 6 verrundet bzw. verschleift die exakte Bahn 5 und verläuft in einem Abstand zur exakten Bahn 5, insbesondere in dem abgerundeten Bereich zwischen den Punkten B und C. Zwischen der exakten Bahn 5 und der geglätteten Bahn 6 sind in der Fig. 3 jeweils Querstriche eingezeichnet, welche die jeweils synchrone Sollposition in der exakten und der geglätteten Bahn anzeigen.

Die graphische Darstellung der Fig. 4 zeigt den Verlauf einer Differenzbahn 7, ebenfalls mit den Positionen der Punkte A, B, C und D gemäß Fig. 3. Weiterhin zeigt die Fig. 4 einen Richtungspfeil für die Bahnrichtung.

Aus Fig. 4 ist ersichtlich, dass durch Überlagerung der geglätteten Bahn 6 gemäß Fig. 3 und der Differenzbahn 7 gemäß Fig. 4 die exakte Bahn 5 entsteht.

Weiterhin ist aus den Fig. 3 und 4 zu erkennen, dass sich die Differenzbahn 7 auf einen sehr kleinen Bereich beschränkt, nämlich nahe dem Nullpunkt des schematischer Weise in den Fig. 3 und 4 gezeigten X-Y-Diagramms. Im Scheitelpunkt haben beide Bahnen die gleiche Richtung (siehe Bewegungspfeile der Fig. 3 und 4).

Es versteht sich, dass die Fig. 3 und 4 zur Verdeutlichung der Darstellung lediglich eine zweidimensionale Darstellung wiedergeben. Erfindungsgemäß kann auch eine dreidimensionale Bewegung bei dreidimensionalen Bahnen 5, 6 und 7 realisiert werden. Die Darstellung ist der Übersichtlichkeit wegen stark vergrößert. In der Praxis würde die geglättete Bahn 6 erheblich dichter an der exakten Bahn 5 liegen und der Bereich der Differenzbahn 7 erheblich kleiner sein.

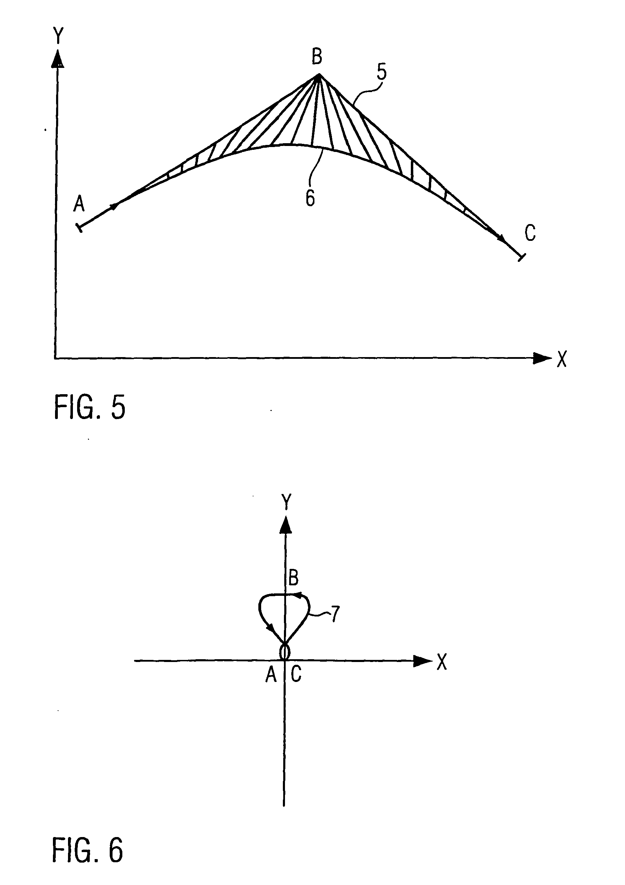

Die Fig. 5 und 6 zeigen Darstellungen, analog den Fig. 3 und 4.

Bei der Darstellung der Fig. 5 durchläuft die exakte Bahn 5 im Punkt B eine scharfe Ecke bei einem Verlauf der exakten Bahn 5 von Punkt A zu Punkt B und nachfolgend zu Punkt C. Die Fig. 5 zeigt den hierzu gehörigen Verlauf der geglätteten Bahn 6. Aus dem Verlauf und den dargestellten Querverbindungen ergibt sich die synchrone Sollposition der exakten Bahn 5 und der geglätteten Bahn 6.

Im Vergleich zu der graphischen Darstellung der Fig. 3 ergibt sich aus Fig. 5, dass die Position der geglätteten Bahn 6 der Position der exakten Bahn 5 zunächst hinterher eilt. Dieses ändert sich bei Punkt B. Ab dem Punkt B eilt die geglättete Bahn 6 der exakten Bahn 5 voraus.

In Position B sind die Geschwindigkeit der geglätteten Bahn 6 und der Differenzbahn 7 exakt gleich groß (siehe Fig. 6), aber auch exakt entgegengesetzt, so dass sich beide Geschwindigkeiten aufheben und die Bahngeschwindigkeit in der exakten Bahn 5 kurzzeitig Null wird. Die Pfeilrichtungen der Fig. 5 und 6 geben den jeweiligen Verlauf in den Bahnen an.

Durch die kurzzeitige Überlagerung zweier entgegengesetzt gleich großer Geschwindigkeiten wird erfindungsgemäß erreicht, dass eine scharfe Ecke (Punkt B) in der exakten Bahn 5 entsteht. Gleichzeitig wird vermieden, dass die Maschinenachsen mit ihrer relativ geringen Dynamik in der geglätteten Bahn 6 ihre Geschwindigkeit auf Null verringern müssen.

Es versteht sich, dass die Darstellungen der Fig. 3 bis 5 zum Zwecke der Verdeutlichung stark vergrößert und sehr schematisch ausgebildet sind.

Die Erfindung ist nicht auf 2 oder 3Achsmaschinen beschränkt, sondern kann auch auf mehrachsige, z.B. 5achsige Bewegungen von 5Achsmaschinen, z.B. Maschinen mit 3 Linear- und 2 rotativen Achsen, angewendet werden. Das prinzipielle Vorgehen bleibt dabei gleich. Die Darstellungen der Fig. 3 bis 5 wurden nur zur einfacheren Erläuterung zweidimensional gewählt. Das Vorgehen lässt sich auf Maschinen mit beliebiger Achszahl und Anordnung entsprechend übertragen.

### Bezugszeichenliste

- 1: Spindel
- 2: Magnetlager, radial oben
- 3: Magnetlager, radial unten
- 4: Magnetlager, axial
- 5: exakte Bahn
- 6: geglättete Bahn
- 7: Differenzbahn
- 8: Werkzeug
- 9: Gestell
- 10: Tisch
- 11: Portal
- 12: Führung
- 13, 14: Schlitten
- 15: Führung
- 16: Gehäuse
- 17: Spindelmotor
- 18: Mittelachse
- 19, 20, 21: Spalt
- 22: Werkzeugaufnahme

## Patentansprüche

1. Verfahren zur Steuerung der Bewegung zumindest einer Baugruppe einer Werkzeugmaschine, wobei die Baugruppe eine drehbare Spindel (1) umfasst, welche mittels zumindest eines zumindest einen Lagerspalt (19, 20, 21) umfassenden Magnetlagers (2, 3, 4) an der Baugruppe gelagert ist, **dadurch gekennzeichnet, dass** die Baugruppe entlang einer gegenüber einer exakten Bahn (5) steuerungsseitig geglätteten Bahn (6) bewegt wird und dass mittels des Magnetlagers (2, 3, 4) die Spindel (1) in ihrem Gehäuse (16) längs einer Differenzbahn (7) bewegt wird, wobei die dabei entstehende Überlagerung der geglätteten Bahn (6) und der Differenzbahn (7) die exakte Bahn (5) ergibt.

2. Verfahren nach Anspruch 1, **dadurch gekennzeichnet, dass** die geglättete Bahn (6) und die Differenzbahn (7) zweidimensional ausgebildet werden.

3. Verfahren nach Anspruch 1, **dadurch gekennzeichnet, dass** die geglättete Bahn (b) und die Differenzbahn (7) dreidimensional ausgebildet werden.

4. Verfahren nach Anspruch 1, **dadurch gekennzeichnet, dass** die geglättete Bahn (6) und die Differenzbahn (7) mehrdimensional für mehrachsige Maschinen ausgebildet werden.

5. Verfahren nach einem der Ansprüche 1 bis 4, **dadurch gekennzeichnet, dass** die geglättete Bahn (6) mit einer fest vorgegebenen Maximaltoleranz geglättet wird.

6. Verfahren nach einem der Ansprüche 1 bis 5, **dadurch gekennzeichnet, dass** die geglättete Bahn (6) und die Differenzbahn (7) parallel zueinander durch die Steuerung interpoliert werden.

7. Verfahren nach Anspruch 6, **dadurch gekennzeichnet, dass** die Sollwerte der geglätteten Bahn (6) den Antriebsmitteln für die Baugruppe zugeleitet werden und dass die Sollwerte der Differenzbahn (7) zumindest einem Antriebsmittel des/r Magnetlager (2, 3, 4) zugeleitet werden.

8. Verfahren nach einem der Ansprüche 1 bis 7, **dadurch gekennzeichnet, dass** die Maximaltoleranz für die geglättete Bahn (6) in jeder Bewegungsrichtung kleiner ist, als die maximal mögliche Bewegung der Spindel (1) innerhalb der Spalte (19, 20, 21).

9. Verfahren nach einem der Ansprüche 1 bis 8, **dadurch gekennzeichnet, dass** die Spindelwelle (1) längs der Differenzbahn (7) mit hoher Dynamik und/oder hohen Beschleunigungen bewegt wird.

10. Verfahren nach einem der Ansprüche 1 bis 9, **dadurch gekennzeichnet, dass** für die Differenzbahn (7) und/oder die geglättete Bahn (6) in unterschiedlichen Bewegungsrichtungen unterschiedliche Toleranzen vorgegeben werden.

11. Verfahren nach einem der Ansprüche 1 bis 10, **dadurch gekennzeichnet, dass** mittels der Überlagerung der Bewegungen längs der geglätteten Bahn (6) und längs der Differenzbahn (7) eine Impulsentkopplung erfolgt.

12. Verfahren nach Anspruch 11, **dadurch gekennzeichnet, dass** mittels der geglätteten Bahn (6) an einer Stelle der exakten Bahn (5) eine ruckartige Gegenbewegung durchgeführt wird, an welcher mittels der Differenzbahn (7) eine schnelle Bewegung erfolgt.

13. Verfahren nach einem der Ansprüche 1 bis 12, **dadurch gekennzeichnet, dass** die Differenzbahn (7) so ausgebildet wird, dass diese unter Beibehaltung der aus der Differenzbahn (7) und der geglätteten Bahn (6) gebildeten exakten Bahn (5) hinsichtlich ihrer Bewegungen vorauseilt oder nachläuft.

14. Verfahren nach einem der Ansprüche 1 bis 13, **dadurch gekennzeichnet, dass** dieses bei einer Fräsmaschine angewandt wird.

## Claims

1. A method for controlling the movement of at least one subassembly of a machine tool, the subassembly comprising a rotatable spindle (1) which is supported at the subassembly by at least one magnetic bearing (2, 3, 4) including at least one bearing gap, **characterized in that** the subassembly is moved along a path (6) smoothed by the controller with respect to an exact path (5) and that the spindle (1) in its housing (16) is moved along a differential path (7) by means of the magnetic bearing (2, 3, 4), wherein the superimposition of the smoothed path (6) and the differential path (7) generated therewith results in the exact path (5).

2. The method of claim 1, **characterized in that** the smoothed path (6) and the differential path (7) are formed two-dimensionally.

3. The method of claim 1, **characterized in that** the smoothed path (6) and the differential path (7) are formed three-dimensionally.

4. The method of claim 1, **characterized in that** the smoothed path (6) and the differential path (7) are formed multi-dimensionally for machines having multiple axes.

5. The method of one of claims 1 to 4, **characterized in that** the smoothed path (6) is smoothed with a fixedly predefined maximum tolerance.

6. The method of one of claims 1 to 5, **characterized in that** the smoothed path (6) and the differential path (7) are interpolated by the controller in parallel to each other.

7. The method of claim 6, **characterized in that** the target values of the smoothed path (6) are transmitted to the driving means of the subassembly and that the target values of the differential path (7) are transmitted to at least a driving means of the magnetic bearing(s) (2, 3, 4).

8. The method of one of claims 1 to 7, **characterized in that** the maximum tolerance for the smoothed path (6) in each direction of movement is smaller than the maximally possible movement of the spindle (1) within the gaps (19, 20, 21).

9. The method of one of claims 1 to 8, **characterized in that** the spindle shaft (1) is moved with high dynamics and/or large accelerations along the differential path (7).

10. The method of one of claims 1 to 9, **characterized in that** different tolerances are predefined for the differential path (7) and/or the smoothed path (6) in different directions of movement.

11. The method of one of claims 1 to 10, **characterized in that** a momentum decoupling occurs by means of the superimposition of the movements along the smoothed path (6) and along the differential path (7).

12. The method of claim 11, **characterized in that** a jerking counter-movement is performed at a location of the exact path (5) by means of the smoothed path (6), at which a fast movement is performed by means of the differential path (7).

13. The method of one of claims 1 to 12, **characterized in that** the differential path (7) is formed such that same, while maintaining the exact path (5) generated by the differential path (7) and the smoothed path (6), runs ahead or lags behind with respect to its movements.

14. The method of one of claims 1 to 13, **characterized in that** same is used in a milling machine.

## Revendications

1. Procédé de commande du mouvement d'au moins un module d'une machine-outil, le module comprenant une broche rotative (1) qui est logée au niveau du module au moyen d'au moins un palier magnétique (2, 3, 4) comprenant au moins un interstice de montage (19, 20, 21), **caractérisé en ce que** le module est déplacé le long d'une trajectoire lissée (6) côté commande par rapport à une trajectoire exacte (5), et **en ce que** la broche (1) est déplacée dans son logement (16) le long d'une trajectoire différentielle (7) au moyen du palier magnétique (2, 3, 4), la superposition en résultant de la trajectoire lissée (6) et de la trajectoire différentielle (7) donnant la trajectoire exacte (5).

2. Procédé selon la revendication 1, **caractérisé en ce que** la trajectoire lissée (6) et la trajectoire différentielle (7) sont réalisées de manière bidimensionnelle.

3. Procédé selon la revendication 1, **caractérisé en ce que** la trajectoire lissée (6) et la trajectoire différentielle (7) sont réalisées de manière tridimensionnelle.

4. Procédé selon la revendication 1, **caractérisé en ce que** la trajectoire lissée (6) et la trajectoire différentielle (7) sont réalisées de manière multidimensionnelle pour machines à plusieurs axes.

5. Procédé selon l'une quelconque des revendications 1 à 4, **caractérisé en ce que** la trajectoire lissée (6) est lissée avec une tolérance maximum bien prédéfinie.

6. Procédé selon l'une quelconque des revendications 1 à 5, **caractérisé en ce que** la trajectoire lissée (6) et la trajectoire différentielle (7) sont interpolées parallèlement l'une à l'autre par la commande.

7. Procédé selon la revendication 6, **caractérisé en ce que** les valeurs de consigne de la trajectoire lissée (6) sont amenées aux moyens d'entraînement pour le module et **en ce que** les valeurs de consigne de la trajectoire différentielle (7) sont amenées au moins à un moyen d'entraînement du / des palier/s magnétique/s (2, 3, 4).

8. Procédé selon l'une quelconque des revendications 1 à 7, **caractérisé en ce que** la tolérance maximum pour la trajectoire lissée (6) dans chaque sens de mouvement est inférieure au mouvement maximum possible de la broche (1) à l'intérieur des interstices (19, 20, 21).

9. Procédé selon l'une quelconque des revendications 1 à 8, **caractérisé en ce que** l'arbre de broche (1) est déplacé le long de la trajectoire différentielle (7) avec une dynamique élevée et/ou des accélérations élevées.

10. Procédé selon l'une quelconque des revendications 1 à 9, **caractérisé en ce que** différentes tolérances sont prédéfinies pour la trajectoire différentielle (7) et/ou la trajectoire lissée (6) dans différents sens de mouvement.

11. Procédé selon l'une quelconque des revendications 1 à 10, **caractérisé en ce qu'**un découplage d'impulsions a lieu au moyen de la superposition des mouvements le long de la trajectoire lissée (6) et le long de la trajectoire différentielle (7).

12. Procédé selon la revendication 11, **caractérisé en ce qu'**un contre-mouvement brusque est effectué au moyen de la trajectoire lissée (6) à un endroit de la trajectoire exacte (5) au niveau duquel un mouvement rapide a lieu au moyen de la trajectoire différentielle (7).

13. Procédé selon l'une quelconque des revendications 1 à 12, **caractérisé en ce que** la trajectoire différentielle (7) est réalisée de telle sorte que celle-ci est en avance ou en retard en ce qui concerne ses mouvements en conservant la trajectoire exacte (5) constituée de la trajectoire différentielle (7) et de la trajectoire lissée (6).

14. Procédé selon l'une quelconque des revendications 1 à 13, **caractérisé en ce que** celui-ci est appliqué dans le cas d'une fraiseuse.
